# FASCICULE DE BREVET EUROPEEN

(11) **EP 3 841 291 B1**
(45) Date de publication et mention de la délivrance du brevet: **08.01.2025**
(21) Numéro de dépôt: 19753117.1
(22) Date de dépôt: 19.08.2019
(51) Int. Cl.: F02K 1/76

(54) **ARCHITECTURE DE COMMANDE D'AÉRONEF, D'AU MOINS UN ACTIONNEUR D'UN CAPÔT MOBILE DE NACELLE**
FLUGZEUGSTEUERARCHITEKTUR MIT MINDESTENS EINEM AKTUATOR EINER MOBILEN GONDELVERKLEIDUNG
AIRCRAFT CONTROL ARCHITECTURE, OF AT LEAST ONE ACTUATOR OF A MOBILE NACELLE COWL

(30) Priorité: 24.08.2018 FR 1857660
(43) Date de publication de la demande: 30.06.2021
(73) Titulaire: Safran Nacelles, 76700 Gonfreville-l'Orcher (FR)
(72) Inventeur: MAALIOUNE, Hakim, 77550 Moissy-Cramayel (FR); PORTALIER, Allice, 77550 Moissy-Cramayel (FR); CORBIN, Julien, 77550 Moissy-Cramayel (FR)
(74) Mandataire: Germain Maureau
(86) Numéro de dépôt international: PCT/EP2019/072140
(87) Numéro de publication internationale: WO 2020/038887

(56) Documents cités:
- WO-A1-2007/057524
- WO-A1-2016/071242
- FR-A1- 2 994 220
- US-A1- 2016 032 866
- US-A1- 2016 252 050

## Description

La présente invention concerne le domaine général des avions. Elle concerne plus particulièrement le domaine des architectures de commande et/ou de surveillance d'un actionneur d'une structure mobile d'un inverseur de poussée pour turboréacteur.

Un avion est mu par plusieurs turboréacteurs logés chacun dans une nacelle abritant également un ensemble de dispositifs d'actionnement annexes liés à son fonctionnement et assurant diverses fonctions lorsque les turboréacteurs sont en fonctionnement ou à l'arrêt. Ces dispositifs d'actionnement annexes comprennent notamment un inverseur de poussée.

Le rôle d'un inverseur de poussée lors de l'atterrissage d'un avion est d'améliorer la capacité de freinage de cet avion en redirigeant vers l'avant au moins une partie de la poussée générée par le turboréacteur. Dans cette phase, l'inverseur obstrue une tuyère d'éjection des gaz de la nacelle et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier en étant ainsi actif dans cette réorientation.

De manière générale, ces capots mobiles sont actionnés par des actionneurs hydrauliques ou pneumatiques qui nécessitent un réseau de transport d'un fluide sous pression. Cet air ou ce fluide sous pression est classiquement obtenu soit par piquage d'air sur le circuit d'air du turboréacteur dans le cas d'actionneurs pneumatiques, soit par prélèvement sur le circuit hydraulique de l'avion dans le cas d'actionneurs hydrauliques. De tels actionneurs requièrent une maintenance importante car la moindre fuite dans le réseau hydraulique ou pneumatique peut être difficilement détectable et risque d'avoir des conséquences dommageables tant sur l'inverse que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document US2016032866A1 et dans le document EP 0 843 089.

Cependant, les actionneurs électromécaniques présentent également plusieurs inconvénients qu'il est nécessaire de résoudre pour profiter pleinement des avantages qu'ils apportent en termes de gain, de masse et d'encombrement.

Notamment, les solutions existantes nécessitent de mettre en place un système électrique comprenant un grand nombre de ces capteurs pour respecter les contraintes de sécurité et de fiabilité globale du système électrique. De plus, même si la masse du système électrique est réduite par rapport à des systèmes pneumatiques ou hydrauliques, elle reste une contrainte majeure dans le domaine aéronautique.

Par ailleurs dans certaines nacelles, l'encombrement pose souvent des problèmes d'installation, ce qui oblige à avoir des capteurs très spécifiques augmentant le cout des systèmes retenus. C'est le cas par exemple de certaines nacelles qui disposent de capteurs d'état dédiés pour détecter spécifiquement le verrouillage ou le déverrouillage par crochets de la nacelle, ainsi que pour détecter la position ouverte ou fermée des capots mobiles de la nacelle.

La présente invention vise à remédier à au moins l'un des inconvénients précités en proposant une solution permettant de réduire la masse et l'encombrement des systèmes électriques d'une nacelle tout en garantissant un bon niveau de sécurité et de fiabilité dans la détection des évènements redoutés.

A cet effet, l'invention a pour objet une architecture de commande et/ou de surveillance d'au moins un actionneur d'un capot mobile d'un inverseur de poussée équipant une nacelle, l'actionneur étant mû par au moins un moteur et comprenant au moins un capteur moteur pour assurer son asservissement en fonction de consignes, l'architecture étant caractérisée en ce qu'elle comprend un système électronique de commande pour traiter au moins une information générée par le capteur moteur et calculer, à partir d'au moins cette information, la position du capot mobile de l'inverseur de poussée.

Ainsi, le capteur moteur de l'actionneur permet de calculer la position du capot mobile à chaque instant, ceci à la différence de l'art antérieur où ce capteur moteur a uniquement pour fonction d'assurer l'asservissement de l'actionneur pour assurer l'ouverture ou la fermeture du capot mobile en fonction de consignes reçues par le système électronique de commande de l'actionneur.

Le calcul de la position du capot mobile réalisée à l'aide du capteur moteur permet avantageusement d'alléger l'architecture d'au moins un capteur d'état. En effet, la position ouverte ou fermée du capot mobile peut être connue du calcul réalisé par le système électronique de commande en fonction de l'information générée par le capteur moteur.

Il convient de noter que l'information générée par le capteur moteur est relative à un déplacement de l'actionneur de sorte qu'il est possible de calculer la position du capot mobile à chaque instant.

Le capteur moteur est un capteur angulaire configuré pour générer ladite information à partir d'une mesure d'angle d'un rotor du moteur.

La mesure d'angle du rotor permet de déterminer le déplacement de l'actionneur. Pour cela, à partir d'une mesure d'angle, le nombre de tour effectué par l'actionneur solidaire rotor peut être connu. Le déplacement de l'actionneur peut alors être calculé en fonction de ce nombre de tour et du pas de l'actionneur. Ainsi, la position du capot mobile déplacé par l'actionneur peut être connue.

Selon une variante de réalisation, dans une configuration en vol, l'architecture est configurée pour détecter un mouvement du capot mobile de l'inverseur de poussée à partir d'un calcul, par le système électronique de commande, de la différence de deux mesures d'angles du rotor par le capteur moteur à deux instants distincts.

La différence de ces deux mesures d'angles peut avantageusement être comparée à une valeur prédéterminée à partir de laquelle le mouvement du capot mobile représente un risque de déploiement en vol.

Dans une configuration d'inversion de poussée, l'architecture est configurée pour calculer, à partir du système électronique de commande, une position absolue du capot mobile de l'inverseur de poussée en fonction d'une intégrale d'une mesure d'angle du rotor entre un instant initial t0, correspondant à la position initiale de la structure mobile, et un instant t donné, correspondant à la position absolue de la structure mobile.

La position absolue correspond à la position du capot mobile à un instant t donné. Dans une configuration déployée du capot mobile, la position absolue correspond à la position déployée du capot mobile. Selon la revendication 1, le système électronique de commande comprend au moins une unité de régulation électronique à pleine autorité du moteur de l'actionneur et un boîtier électronique de commande dédié à l'asservissement du moteur et relié électriquement à l'unité de régulation électronique à pleine autorité, le capteur moteur étant relié électriquement au boîtier électronique de commande.

Selon des modes particuliers de réalisation, l'architecture peut comprendre l'une ou plusieurs des caractéristiques suivantes prises isolément ou selon toutes combinaisons techniques possibles :
- le système électronique de commande peut comprendre deux unités de régulation électronique à pleine autorité, de sorte à former un système duplex fonctionnant en cas de panne de l'une de ces deux unités,
- le boîtier électronique de commande peut être intégré à au moins l'unité de régulation électronique à pleine autorité,
- l'architecture peut comprendre deux capteurs bi-voies d'état des verrous primaires du capot mobile de l'inverseur de poussée, chaque capteur bi-voies étant relié électriquement à l'unité de régulation électronique à pleine autorité,
- l'architecture peut comprendre deux capteurs mono-voie d'état des verrous primaires du capot mobile de l'inverseur de poussée, chaque capteur mono-voie étant relié électriquement à l'unité de régulation électronique à pleine autorité,
- l'architecture peut comprendre un capteur mono-voie d'état d'un verrou tertiaire du capot mobile relié électriquement à l'unité de régulation électronique à pleine autorité,
- l'architecture peut comprendre un capteur mono-voie de détection de la position du capot mobile de l'inverseur de poussée, le capteur mono-voie de détection étant relié électriquement à l'unité de régulation électronique à pleine autorité.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- la figure 1 représente un schéma fonctionnel d'une architecture de commande et/ou de surveillance d'au moins un actionneur d'un capot mobile d'un inverseur de poussée équipant une nacelle, selon un premier mode de réalisation,
- la figure 2 représente un schéma fonctionnel de l'architecture illustrée en figure 1 selon un deuxième mode de réalisation,
- la figure 3 représente un schéma fonctionnel de l'architecture illustrée en figure 1 selon un troisième mode de réalisation,
- la figure 4 représente un schéma fonctionnel de l'architecture illustrée en figure 1 selon un quatrième mode de réalisation.

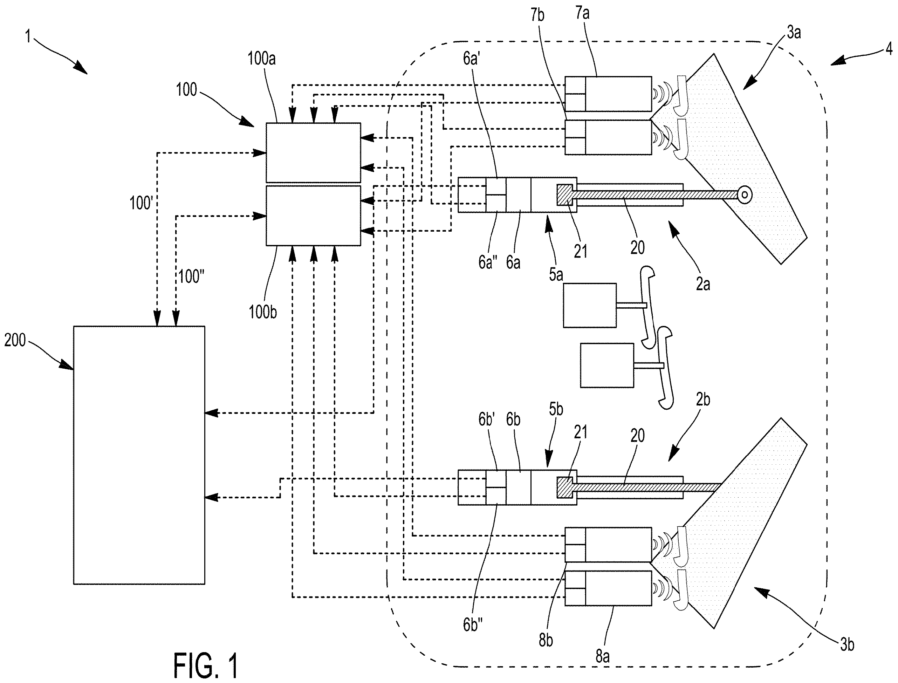

En se référant à la figure 1, on a représenté une architecture 1 de commande et/ou de surveillance d'actionneurs de commande 2a, 2b de capots mobiles 3a, 3b d'un inverseur de poussée 4 équipant une nacelle.

L'inverseur de poussée 4 comporte deux capots mobiles 3a, 3b, à savoir un premier capot mobile 3a et un deuxième capot mobile 3b, déplaçables chacun entre une position d'ouverture et une position de fermeture de l'inverseur par au moins un actionneur de commande 2a, 2b. Les capots mobiles 3a, 3b forment ensemble une structure mobile.

L'inverseur 4 comporte en outre deux moteurs électriques 5a, 5b contrôlant chacun le déplacement d'un capot mobile 3a, 3b. Ces moteurs électriques 5a, 5b entraînent les actionneurs de commande 2a, 2b de chaque capots mobiles 3a, 3b par l'intermédiaire d'une tige filetée 20 reliant chaque capot mobile 3a, 3b à son moteur électrique 5a, 5b associé.

Un système électronique de commande comprend un boîtier électronique de commande 200 dédié à l'asservissement des moteurs électriques 5a, 5b et une unité de régulation électronique à pleine autorité des moteurs électriques 5a, 5b communément dénommé FADEC (Full Authority Digital Engine Control). L'unité de régulation électronique à pleine autorité comprend avantageusement un module électronique de contrôle 100 des moteurs électriques 5a, 5b communément dénommé EEC (Electronic Engine Control). Le module électronique de contrôle 100 comprend lui-même un premier sous-module électronique 100a dédié à la commande du premier capot mobile 3a et un deuxième sous-module électronique 100b dédié à la commande du deuxième capot mobile 3b.

Selon la configuration représentée, chaque moteur électrique 5a, 5b est relié électriquement au boîtier électronique de commande 200 qui gère la séquence de déplacement des deux capots mobiles 3a, 3b en régulant la vitesse de rotation des moteurs électriques 5a, 5b.

Le boîtier électronique de commande 200 est relié électriquement par une liaison bidirectionnelle 100', 100" à chacun des sous-modules électroniques 100a, 100b. La liaison bidirectionnelle 100', 100" est avantageusement de type ARINC. Cette liaison bidirectionnelle comprend deux voies 100', 100" bidirectionnelles d'échange de donnée. Une première voie 100' est reliée électriquement au premier sous-module électronique 100a et une deuxième voie 100" est reliée électriquement au deuxième sous-module électronique 100b. Chaque voie 100', 100" transmet, depuis le boîtier électronique de commande 200 vers son sous-module électronique 100a, 100b associé, des données relatives à la position de chaque des capots mobiles 3a, 3b, de sorte que la position du premier capot mobile 3a et du deuxième capot mobile 3b est connue de chaque sous-module électronique 100a, 100b.

En fonction de ces données, l'ordre de déploiement ou de rétraction de la structure mobile de l'inverseur de poussée 4 est émis par le module électronique de contrôle 100 vers le boîtier électronique de commande 200. Il est également possible d'intégrer le boîtier électronique commande 200 dans l'unité de régulation électronique à pleine autorité. Le boîtier électronique de commande 200 est prévu pour transformer des consignes de commande reçues par le module électronique de contrôle 100 des moteurs électriques 5a, 5b en commande de courant des moteurs électriques 5a, 5b.

Les actionneurs de commande 2a, 2b de l'inverseur de poussée sont du type électromécanique. Ils sont entraînés par des boîtiers d'engrenages montés sur chaque actionneur. Une loi de commande (en vitesse ou de type tout ou rien) des actionneurs 2a, 2b des capots mobiles 3a, 3b de l'inverseur de poussée 4 est transmise depuis le boîtier électronique de commande 200 vers chaque actionneur de commande 2a, 2b par l'intermédiaire des moteurs électriques 5a, 5b, des tiges d'actionnement 20 filetées et des boîtiers d'engrenages 21.

Chaque actionneur de commande 2a, 2b comprend avantageusement un capteur moteur 6a, 6b. Ce capteur moteur 6a, 6b de type angulaire est prévu pour générer une information relative à une mesure d'angle d'un rotor du moteur électrique 5a, 5b associé. L'information générée par le capteur moteur 6a, 6b est transmise au boîtier électronique de commande 200.

La mesure d'angle du rotor permet de déterminer la course de déplacement de la tige d'actionnement 20 de l'actionneur 2a, 2b associé. Plus particulièrement, à partir d'une mesure d'angle, le nombre de tour effectué par la tige d'actionnement 20 de l'actionneur 2a, 2b solidaire rotor peut être connu. Le déplacement de l'actionneur 2a, 2b peut alors être calculé en fonction de ce nombre de tour et du pas de la tige d'actionnement 20 filetée. Ainsi, la position du capot mobile 3a, 3b déplacé par la tige 20 de l'actionneur 2a, 2b correspondant peut être connue à chaque instant.

Le module électronique de contrôle 100 des moteurs électriques 5a, 5b relié par les voies 100', 100" bidirectionnelles au boîtier électronique de commande 200 peut donc assurer le contrôle et/ou la surveillance de la position des capots mobiles 3a, 3b à chaque instant.

Selon une première application, dans une configuration en vol, une détection de mouvement de chaque capots mobiles 3a, 3b peut être prévue au niveau des actionneurs 2a, 2b afin de prévenir un déploiement de l'inverseur de poussée 4. Pour cela, le boîtier électronique de commande 200 calcule, une différence entre deux mesures d'angle du rotor du moteur électrique 5a, 5b reçues par le capteur moteur 6a, 6b à deux instants distincts. La comparaison de cette différence par rapport à une valeur de référence permet la détection d'un déplacement de la course de la tige d'actionnement 20 et, par conséquent, la détection d'un mouvement du capot mobile 3a, 3b associé.

Selon une deuxième application, dans une configuration d'inversion de poussée, la position déployée des capots mobiles 3a, 3b peut être identifiée en calculant une intégrale d'une mesure d'angle du rotor entre un instant initial t0, correspondant à la position initiale de la structure mobile, et un instant t donné, correspondant à la position déployée des capots mobiles 3a, 3b. Il est alors possible d'identifier une position déployée du capot mobile 3a, 3b, ceci sans capteur de détection de cette position.

Dans ces deux applications, le capteur moteur 6a, 6b permet, d'une part d'assurer un asservissement du moteur électrique 5a, 5b correspondant, et d'autre part, de contrôler et/ou surveiller la position du capot mobile 3a, 3b associé à ce moteur électrique 5a, 5b.

L'inverseur de poussée 4 peut comporter trois niveaux de verrouillage qui permettent d'assurer individuellement la retenue de l'inverseur de poussée.

Un premier niveau de verrouillage est réalisé par un premier type de verrou mécanique appelé verrou primaire, associé à chaque capot mobile 3a, 3b de l'inverseur 4. Chaque verrou primaire est monté directement sur un moteur électrique 5a, 5b. Ces verrous primaires permettent d'assurer une retenue du capot mobile 3a, 3b qui lui est associé. Par exemple, ils peuvent être de type frein à disque ou de type blocage par pion venant entraver le mouvement de la tige d'actionnement 20.

Compte-tenu que les deux capots mobiles 3a, 4b sont liées mécaniquement par l'intermédiaire de liens mécaniques (non représenté), le verrou primaire de l'une des capots mobiles 3a, 3b constitue un second niveau de verrouillage pour l'autre capot mobile 3a, 3b dont il forme un verrou secondaire. Le verrou secondaire est destiné à reprendre les chargements du capot mobile 3a, 3b en cas de défaillance du verrou primaire. Ainsi, si le premier type de verrou mécanique de l'une des capots mobiles 3a, 3b est considéré comme le verrou primaire, le premier type de verrou mécanique de l'autre capot mobile 3a, 3b peut être considéré comme étant le verrou secondaire et réciproquement.

Le troisième niveau de verrouillage est réalisé par un deuxième type de verrou mécanique en butée, appelé verrou tertiaire, qui est positionné à une extrémité latérale de chaque capot mobile 3a, 3b ou d'un seul capot mobile 3a, 3b. Ce ou ces verrou(s) tertiaire(s) peu(ven)t être relié(s) au boîtier électronique de commande 200, au module électronique de contrôle 100 des moteurs électriques 5a, 5b et/ou directement au cockpit de l'avion. Ils sont de préférence commandés directement depuis le cockpit de l'avion afin d'assurer une sûreté de fonctionnement suffisante et de s'affranchir d'éventuels modes communs. En effet, lorsque relié(s) au module électronique de contrôle 100 ou au cockpit de l'avion, le(s) verrou(s) tertiaire(s) reste(nt) opérationnel(s) même en cas de défaillance du boîtier électronique de commande 200. Ce(s) verrou(s) permet(tent) de reprendre le(s) chargement(s) du capot mobile 3a, 3b de l'inverseur 4 en cas de défaillance des verrous primaire et secondaire.

Dans ce premier mode de réalisation représenté à la figure 1, l'architecture 1 comprend, pour chaque capot mobile 3a, 3b, deux capteurs bi-voies 7a, 7b, 8a, 8b d'état des verrous primaires. Chaque capteur bi-voies 7a, 7b, 8a, 8b est relié électriquement à chacun des sous-module électronique 100a, 100b, de sorte à assurer une redondance des données émises par ces capteurs bi-voies 7a, 7b, 8a, 8b entre chacun des sous-modules électroniques 100a, 100b.

Cette redondance, dite première redondance, est alors effectuée par chaque sous-module électronique 100a, 100b entre l'état des capteurs bi-voies 7a, 7b des verrous primaires associé à ce sous-module électronique 100a, 100b.

Ce premier mode de réalisation illustre une variante de réalisation selon la revendication 1 dans laquelle le capteur moteur 6a l'actionneur 2a du premier capot mobile 3a est relié électriquement au premier sous-module électronique 100a, et où le capteur moteur 6b l'actionneur 2b du deuxième capot mobile 3b est relié électriquement au deuxième sous-module électronique 100a. Dans cette variante, le premier sous-module électronique 100a est configuré pour calculer indépendamment la position du premier capot mobile 3a et le deuxième sous module électronique 100b peut être configuré pour calculer indépendamment la position du deuxième capot mobile 3b. Pour chacun des capteur moteur 6a, 6b, l'information générée est alors reçue par le sous-module électronique 100a, 100b correspondant.

Une autre redondance, dite deuxième redondance, est alors effectuée par chaque sous-module électronique 100a, 100b et pour chaque capot mobile 3a, 3b, entre, d'une part, la position du capot mobile 3a, 3b correspondant qui est calculée par le boîtier électronique de commande 200 et, d'autre part, la position du même capot mobile 3a, 3b qui est calculée par le sous-module électronique 100a, 100b lui-même.

En cas de défaillance du calcul de la position du capot mobile 3a, 3b par le boîtier électronique de commande 200, la position du capot mobile 3a, 3b correspondant qui est calculée par le sous-module électronique 100a, 100b lui-même peut avoir autorité et inversement.

La première redondance et la deuxième redondance utilisée en combinaison l'une de l'autre permettent d'effectuer des contrôles et/ou des surveillances de la position des capots mobiles 3a, 3b en vue d'assurer une position ou déplacement synchronisé d'un des capots mobiles 3a, 3b par rapport à l'autre capot mobile 3a, 3b.

Il convient de noter que ce premier mode de réalisation permet de s'affranchir d'un capteur d'état du verrou tertiaire, ainsi que, pour chacun capot mobile 3a, 3b, d'un capteur de détection de la position de ce capot.

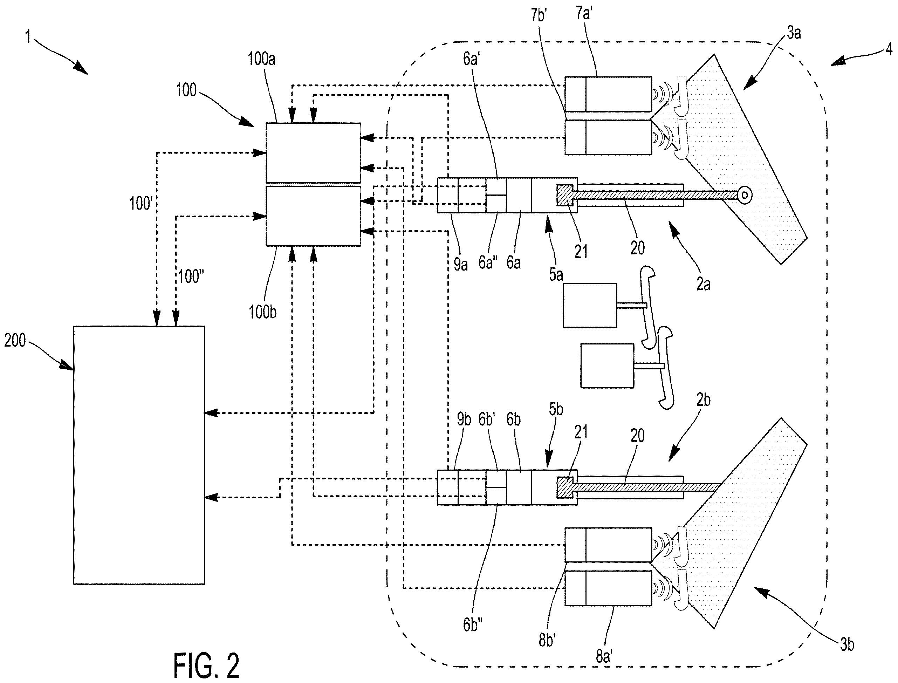

A la figure 2, on a représenté un deuxième mode de réalisation de l'architecture représentée à la figure 1. L'architecture 1 selon ce deuxième mode de réalisation diffère du premier mode de réalisation en ce que les capteurs bi-voies 7a, 7b, 8a, 8b sont des capteurs mono-voie 7a', 7b', 8a', 8b' et dont, pour chaque capot mobile 3a, 3b, un premier capteur mono-voie 7a', 8a' est relié électriquement au premier sous-module électronique 100a et un deuxième capteur mono-voie 7b', 8b' est relié électriquement au deuxième sous-module électronique 100a. Cet architecture 1 comprend, par ailleurs, pour chaque capot mobile 3a, 3b, un capteur mono-voie 9a, 9b d'état d'un verrou tertiaire du capot mobile 3a, 3b correspondant.

Dans ce deuxième mode de réalisation, la première redondance et la deuxième redondance sont réalisées de façon identique au premier mode de réalisation, ce deuxième mode de réalisation comprend, en outre, une redondance supplémentaire, dite troisième redondance, où l'état du capteur mono-voie 9a, 9b du verrou tertiaire du capot mobile 3a, 3b associé est pris en compte.

Les première redondance, deuxième redondance et troisième redondance sont utilisées en combinaison l'une de l'autre au même fin que l'architecture 1 du premier mode de réalisation.

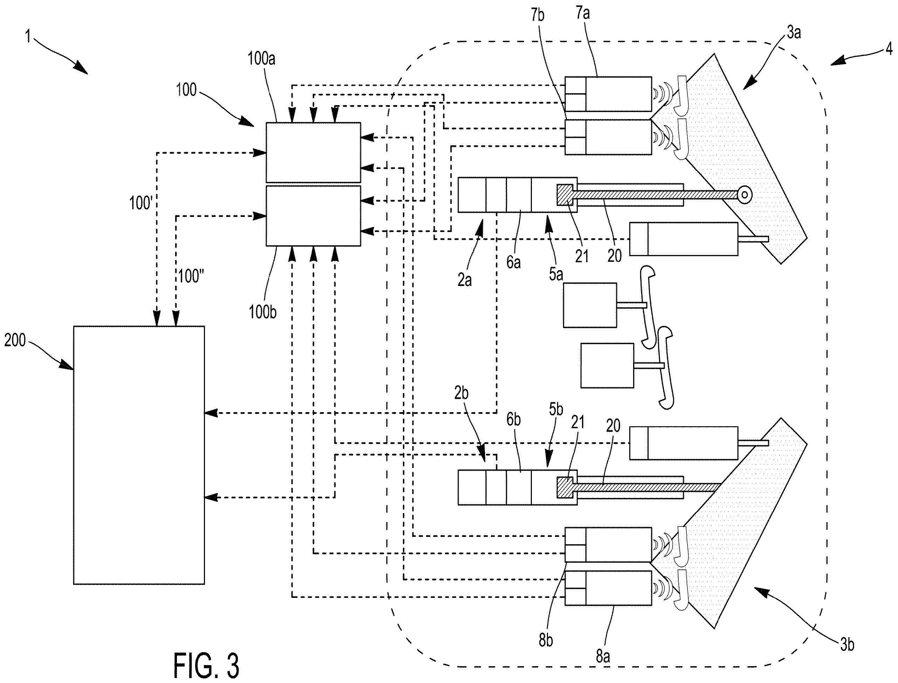

A la figure 3, on a représenté un troisième mode de réalisation de l'architecture représentée à la figure 1. L'architecture 1 selon ce troisième mode de réalisation diffère du premier mode de réalisation en ce qu'il comprend, en outre, pour chaque capot mobile 3a, 3b, un capteur mono-voie 10a, 10b de détection de sa position.

Dans ce troisième mode de réalisation, la première redondance et la deuxième redondance sont réalisées de façon identique au premier mode de réalisation, ce deuxième mode de réalisation comprend, en outre, une redondance supplémentaire, dite troisième redondance, où l'état du capteur mono-voie 10a, 10b de détection du capot mobile 3a, 3b associé est pris en compte.

Dans ce troisième mode de réalisation, les première redondance, deuxième redondance et troisième redondance sont utilisées en combinaison l'une de l'autre au même fin que l'architecture 1 du premier mode de réalisation.

De façon avantageuse, dans ce troisième mode de réalisation, uniquement les deuxième redondance et troisième redondance sont utilisées en combinaison l'une de l'autre au même fin que l'architecture 1 du premier mode de réalisation.

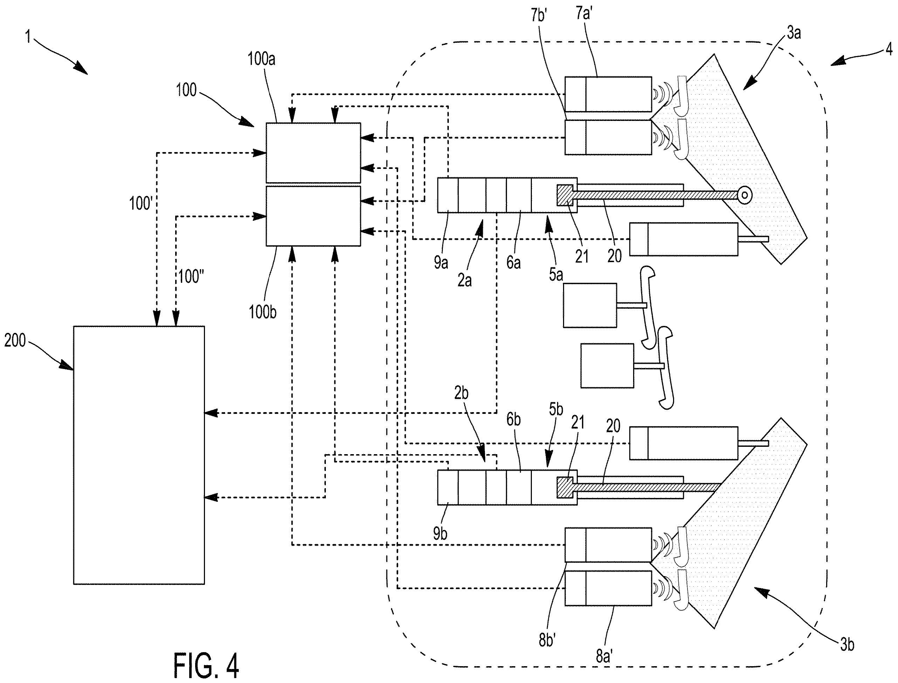

A la figure 4, on a représenté un quatrième mode de réalisation de l'architecture représentée à la figure 2. L'architecture 1 selon ce quatrième mode de réalisation diffère du deuxième mode de réalisation en ce qu'il comprend, en outre, pour chaque capot mobile 3a, 3b, un capteur mono-voie 10 de détection de sa position.

Dans ce quatrième mode de réalisation, la première redondance et la deuxième redondance sont réalisées de façon identique au deuxième mode de réalisation, ce quatrième mode de réalisation comprend, en outre, une redondance supplémentaire, dite troisième redondance, où l'état du capteur mono-voie du verrou tertiaire du capot mobile 3b associé est pris en compte.

Dans ce quatrième mode de réalisation, les première redondance, deuxième redondance et troisième redondance sont utilisées en combinaison l'une de l'autre au même fin que l'architecture 1 du premier mode de réalisation.

Bien évidemment, l'invention ne se limite pas aux seules formes de réalisation de l'architecture décrites dans ces différents modes de réalisation à titre d'exemples sans toutefois sortir du contexte de l'invention.

## Revendications

1. Architecture (1) de commande et/ou de surveillance d'au moins un actionneur (2a, 2b) d'un capot mobile (3a, 3b) d'un inverseur de poussée (4) équipant une nacelle, l'actionneur (2a, 2b) étant mû par au moins un moteur (5a, 5b) et comprenant au moins un capteur moteur (6a, 6b) pour assurer son asservissement en fonction de consignes, l'architecture (1) comprenant un système électronique de commande pour traiter au moins une information générée par le capteur moteur (6a, 6b) et calculer, à partir d'au moins cette information, la position du capot mobile (3a, 3b) de l'inverseur de poussée (4), le capteur moteur (6a, 6b) étant un capteur angulaire configuré pour générer ladite information à partir d'une mesure d'angle d'un rotor du moteur (5a, 5b), l'architecture (1) étant **caractérisée en ce que**, dans une configuration d'inversion de poussée, l'architecture (1) est configurée pour calculer, à partir du système électronique de commande, une position absolue du capot mobile (3a, 3b) de l'inverseur de poussée (4) en fonction d'une intégrale d'une mesure d'angle du rotor entre un instant initial t0, correspondant à la position initiale du capot mobile (3a, 3b), et un instant t donné, **en ce que** le système électronique de commande comprend au moins une unité de régulation électronique à pleine autorité du moteur (5a, 5b) de l'actionneur (2a, 2b) et un boîtier électronique de commande (200) dédié à l'asservissement du moteur (5a, 5b), et relié électriquement à l'unité de régulation électronique à pleine autorité, le capteur moteur (6a, 6b) étant relié électriquement au boîtier électronique de commande (200),
l'unité de régulation électronique à pleine autorité comprenant un module électronique de contrôle (100) des moteurs électriques (5a, 5b), le module électronique de contrôle (100) comprenant un premier sous-module électronique (100a) dédié à la commande du premier capot mobile (3a) et un deuxième sous-module électronique (100b) dédié à la commande du deuxième capot mobile (3b),
le capteur moteur (6a) de l'actionneur (2a) du premier capot mobile (3a) étant relié électriquement au premier sous-module électronique (100a), le capteur moteur (6b) de l'actionneur (2b) du deuxième capot mobile (3b) étant relié électriquement au deuxième sous-module électronique (100a), le premier sous-module électronique (100a) étant configuré pour calculer indépendamment la position du premier capot mobile (3a) et le deuxième sous module électronique (100b) étant configuré pour calculer indépendamment la position du deuxième capot mobile (3b).

2. Architecture (1) selon la revendication précédente, **caractérisée en ce que**, dans une configuration en vol, l'architecture (1) est configurée pour détecter un mouvement du capot mobile (3a, 3b) de l'inverseur de poussée (4) à partir d'un calcul, par le système électronique de commande, de la différence de deux mesures d'angle du rotor par le capteur moteur (6a, 6b) à deux instants distincts.

3. Architecture (1) selon l'une quelconque des revendications précédentes, **caractérisée en ce que** le système électronique de commande comprend deux unités de régulation électronique à pleine autorité, de sorte à former un système duplex fonctionnant en cas de panne de l'une de ces deux unités.

4. Architecture (1) selon la revendication 2, **caractérisée en ce que** le boîtier électronique de commande (200) peut être intégré à l'au moins une unité de régulation électronique à pleine autorité.

5. Architecture (1) selon l'une quelconque des revendications précédentes, **caractérisée en ce que** l'architecture (1) comprend deux capteurs bi-voies (7a, 7b, 8a, 8b) d'état des verrous primaires du capot mobile (3a, 3b) de l'inverseur de poussée (4), chaque capteur bi-voies (7a, 7a', 7b, 7b', 8a, 8a', 8b, 8b') étant relié électriquement à l'unité de régulation électronique à pleine autorité.

6. Architecture (1) selon l'une quelconque des revendications 1 à 4, **caractérisée en ce que** l'architecture (1) comprend deux capteurs mono-voie (7a', 7b', 8a', 8b') d'état des verrous primaires du capot mobile (3a, 3b) de l'inverseur de poussée (4), chaque capteur mono-voie (7a', 7b', 8a', 8b') étant relié électriquement à l'unité de régulation électronique à pleine autorité.

7. Architecture (1) selon l'une quelconque des revendications précédentes, **caractérisée en ce que** l'architecture (1) comprend au moins un capteur mono-voie (9) d'état d'un verrou tertiaire du capot mobile (3a, 3b) relié électriquement à l'unité de régulation électronique à pleine autorité.

8. Architecture (1) selon l'une quelconque des revendications précédentes, **caractérisée en ce que** l'architecture (1) comprend un capteur mono-voie (10) de détection de la position du capot mobile (3a, 3b) de l'inverseur de poussée (4), le capteur mono-voie (10) de détection étant relié électriquement à l'unité de régulation électronique à pleine autorité.

## Patentansprüche

1. Architektur (1) zur Steuerung und/oder Überwachung mindestens eines Aktuators (2a, 2b) einer beweglichen Haube (3a, 3b) eine Schubumkehrers (4), mit dem eine Gondel ausgestattet ist, wobei der Aktuator (2a, 2b) von mindestens einem Motor (5a, 5b) bewegt wird und mindestens einen Motorsensor (6a, 6b) umfasst, um seine Regelung in Abhängigkeit von Sollwerten zu gewährleisten, wobei die Architektur (1) ein elektronisches Steuersystem umfasst, um mindestens eine Information, die vom Motorsensor (6a, 6b) erzeugt wird, zu verarbeiten und anhand mindestens dieser Information die Position der beweglichen Haube (3a, 3b) de Schubumkehrers (4) zu berechnen, wobei der Motorsensor (6a, 6b) ein Winkelsensor ist, der so konfiguriert ist, dass er die Information anhand einer Winkelmessung eines Rotors des Motors (5a, 5b) erzeugt, wobei die Architektur (1) **dadurch gekennzeichnet ist, dass** die Architektur (1) in einer Schubumkehrkonfiguration so konfiguriert ist, dass sie anhand des elektronischen Steuersystems eine absolute Position der beweglichen Haube (3a, 3b) des Schubumkehrers (4) in Abhängigkeit von einem Integral einer Winkelmessung des Rotors zwischen einem Anfangszeitpunkt t0, der der Anfangsposition der beweglichen Haube (3a, 3b) entspricht, und einem gegebenen Zeitpunkt t berechnet, dadurch, dass das elektronische Steuersystem mindestens eine elektronische Regeleinheit mit voller Autorität des Motors (5a, 5b) des Aktuators (2a, 2b) und eine elektronische Steuerbox (200) umfasst, die der Regelung des Motors (5a, 5b) gewidmet ist und elektrisch mit der elektronischen Regeleinheit mit voller Autorität verbunden ist, wobei der Motorsensor (6a, 6b) elektrisch mit der elektronischen Steuerbox (200) verbunden ist,
wobei die elektronische Regeleinheit mit voller Autorität ein elektronisches Modul zur Steuerung (100) der Elektromotoren (5a, 5b) umfasst, wobei das elektronische Steuermodul (100) ein erstes elektronisches Submodul (100a) umfasst, das der Steuerung der ersten beweglichen Haube (3a) gewidmet ist, und ein zweites elektronisches Submodul (100b), das der Steuerung der zweiten beweglichen Haube (3b) gewidmet ist,
wobei der Motorsensor (6a) des Aktuators (2a) der ersten beweglichen Haube (3a) elektrisch mit dem ersten elektronischen Submodul (100a) verbunden ist, wobei der Motorsensor (6b) des Aktuators (2b) der zweiten beweglichen Haube (3b) elektrisch mit dem zweiten elektronischen Submodul (100a) verbunden ist, wobei das erste elektronische Submodul (100a) so konfiguriert ist, dass es unabhängig die Position der ersten beweglichen Haube (3a) berechnet, und das zweite elektronische Submodul (100b) so konfiguriert ist, dass es unabhängig die Position der zweiten beweglichen Haube (3b) berechnet.

2. Architektur (1) nach dem vorstehenden Anspruch, **dadurch gekennzeichnet, dass** die Architektur (1) in einer Flugkonfiguration so konfiguriert ist, dass sie eine Bewegung der beweglichen Haube (3a, 3b) des Schubumkehrers (4) anhand einer Berechnung, durch das elektronische Steuersystem, der Differenz von zwei Winkelmessungen des Rotors durch den Motorsensor (6a, 6b) zu zwei verschiedenen Zeitpunkten erkennt.

3. Architektur (1) nach einem der vorstehenden Ansprüche, **dadurch gekennzeichnet, dass** das elektronische Steuersystem zwei elektronische Regeleinheiten mit voller Autorität umfasst, sodass es ein Duplexsystem bildet, das im Falle eines Ausfalls einer dieser zwei Einheiten funktioniert.

4. Architektur (1) nach Anspruch 2, **dadurch gekennzeichnet, dass** die elektronische Steuerbox (200) in die mindestens eine elektronische Regeleinheit mit voller Autorität integriert werden kann.

5. Architektur (1) nach einem der vorstehenden Ansprüche, **dadurch gekennzeichnet, dass** die Architektur (1) zwei Zweikanal-Sensoren (7a, 7b, 8a, 8b) für den Zustand der Primärverriegelungen der beweglichen Haube (3a, 3b) des Schubumkehrers (4) umfasst, wobei jeder Zweikanal-Sensor (7a, 7a', 7b, 7b', 8a, 8a', 8b, 8b') elektrisch mit der elektronischen Regeleinheit mit voller Autorität verbunden ist.

6. Architektur (1) nach einem der Ansprüche 1 bis 4, **dadurch gekennzeichnet, dass** die Architektur (1) zwei Einkanal-Sensoren (7a', 7b', 8a', 8b') für den Zustand der Primärverriegelungen der beweglichen Haube (3a, 3b) des Schubumkehrers (4) umfasst, wobei jeder Einkanal-Sensor (7a', 7b', 8a', 8b') elektrisch mit der elektronischen Regeleinheit mit voller Autorität verbunden ist.

7. Architektur (1) nach einem der vorstehenden Ansprüche, **dadurch gekennzeichnet, dass** die Architektur (1) mindestens einen Einkanal-Sensor (9) für den Zustand einer Tertiärverriegelung der beweglichen Haube (3a, 3b) umfasst, der elektrisch mit der elektronischen Regeleinheit mit voller Autorität verbunden ist.

8. Architektur (1) nach einem der vorstehenden Ansprüche, **dadurch gekennzeichnet, dass** die Architektur (1) einen Einkanal-Sensor (10) zur Erkennung der Position der beweglichen Haube (3a, 3b) des Schubumkehrers (4) umfasst, wobei der Einkanal-Erkennungssensor (10) elektrisch mit der elektronischen Regeleinheit mit voller Autorität verbunden ist.

## Claims

1. An architecture (1) for controlling and/or supervising at least one actuator (2a, 2b) of a movable cowl (3a, 3b) of a thrust reverser (4) equipping a nacelle, the actuator (2a, 2b) being powered by at least one motor (5a, 5b) and comprising at least one motor sensor (6a, 6b) to ensure the servo-control thereof depending on setpoints, the architecture (1) comprising an electronic control system for processing at least one piece of information generated by the motor sensor (6a, 6b) and calculating, from at least this one piece of information, the position of the movable cowl (3a, 3b) of the thrust reverser (4), the motor sensor (6a, 6b) being an angular sensor configured to generate said information from an angle measurement of a rotor of the motor (5a, 5b), the architecture (1) being **characterized in that**, in a thrust reversal configuration, the architecture (1) is configured to calculate, from the electronic control system, an absolute position of the movable cowl (3a, 3b) of the thrust reverser (4) depending on an integral of an angle measurement of the rotor between an initial time t0, corresponding to the initial position of the movable cowl (3a, 3b), and a given time t, **in that** the electronic control system comprises at least one full authority electronic regulation unit of the motor (5a, 5b) of the actuator (2a, 2b) and an electronic control box (200) dedicated to the servo-control of the motor (5a, 5b), and electrically connected to the full authority electronic regulation unit, the motor sensor (6a, 6b) being electrically connected to the electronic control box (200), the full authority electronic regulation unit comprising an electronic control module (100) of the electric motors (5a, 5b), the electronic control module (100) comprising a first electronic sub-module (100a) dedicated to the control of the first movable cowl (3a) and a second electronic sub-module (100b) dedicated to the control of the second movable cowl (3b), the motor sensor (6a) of the actuator (2a) of the first movable cowl (3a) being electrically connected to the first electronic sub-module (100a), the motor sensor (6b) of the actuator (2b) of the second movable cowl (3b) being electrically connected to the second electronic sub-module (100a), the first electronic sub-module (100a) being configured to independently calculate the position of the first movable cowl (3a) and the second electronic sub-module (100b) being configured to independently calculate the position of the second movable cowl (3b).

2. The architecture (1) according to the preceding claim, **characterized in that**, in an in-flight configuration, the architecture (1) is configured to detect a movement of the movable cowl (3a, 3b) of the thrust reverser (4) from a calculation, by the electronic control system, of the difference of two angle measurements of the rotor by the motor sensor (6a, 6b) at two distinct times.

3. The architecture (1) according to any one of the preceding claims, **characterized in that** the electronic control system comprises two full authority electronic regulation units, so as to form a duplex system operating in the case of failure of one of these two units.

4. The architecture (1) according to claim 2, **characterized in that** the electronic control unit (200) can be integrated into the at least one full authority electronic regulation unit.

5. The architecture (1) according to any one of the preceding claims, **characterized in that** the architecture (1) comprises two two-channel sensors (7a, 7b, 8a, 8b) of the state of the primary locks of the movable cowl (3a, 3b) of the thrust reverser (4), each two-channel sensor (7a, 7a', 7b, 7b', 8a, 8a', 8b, 8b') being electrically connected to the full authority electronic regulation unit.

6. The architecture (1) according to any one of claims 1 to 4, **characterized in that** the architecture (1) comprises two single-channel sensors (7a', 7b', 8a', 8b') of the state of the primary locks of the movable cowl (3a, 3b) of the thrust reverser (4), each single-channel sensor (7a', 7b', 8a', 8b') being electrically connected to the full authority electronic regulation unit.

7. The architecture (1) according to any one of the preceding claims, **characterized in that** the architecture (1) comprises at least one single-channel sensor (9) of the state of a tertiary lock of the movable cowl (3a, 3b) electrically connected to the full authority electronic regulation unit.

8. The architecture (1) according to any one of the preceding claims, **characterized in that** the architecture (1) comprises a single-channel sensor (10) for detecting the position of the movable cowl (3a, 3b) of the thrust reverser (4), the single-channel detection sensor (10) being electrically connected to the full authority electronic regulation unit.
